# EUROPÄISCHE PATENTANMELDUNG

(11) **EP 3 173 813 A1**
(43) Veröffentlichungstag der Anmeldung: **31.05.2017**
(21) Anmeldenummer: 16195646.1
(22) Anmeldetag: 26.10.2016
(51) Int. Cl.: G01S 7/521, H04R 1/28, H04R 1/30, G01S 15/93

(54) **AKUSTISCH SENSITIVES GEHÄUSE UND VERFAHREN ZUM EMPFANGEN VON AKUSTISCHEN SIGNALEN**

(30) Priorität: 27.11.2015 DE 102015223502
(71) Anmelder: ROBERT BOSCH GMBH, 70442 Stuttgart (DE)
(72) Erfinder: Doessel, Kerrin, 70193 Stuttgart (DE); Karl, Matthias, 76275 Ettlingen (DE); Scheben, Rolf, 72762 Reutlingen (DE)

(57) **Zusammenfassung**

Die Vorrichtung umfasst einen Grundkörper (40a) mit einer Oberseite (70a), einer Membran (20a) und einer Empfangseinrichtung (90a) zum Empfangen von Schallsignalen (10a). Der Grundkörper (40a) weist einen schallführenden Kanal (60a) auf, der von der Oberseite (70a) in die Tiefe des Grundkörpers (40a) reicht. Dabei ist der Führungskanal (60a) gegenüber der Umgebung mit einer Membran (20a) abgedeckt und führt die Schallsignale (10a) auf die Empfangseinrichtung (90a) zum Empfangen von Schallsignalen (10a).

## Beschreibung

### Stand der Technik

Die Erfindung betrifft eine Vorrichtung und ein Verfahren zum Empfangen von akustischen Signalen.

Die Schrift DE 10 2005 040 081 B4 beschreibt einen Ultraschallsensor, der mehrere Sendeelemente, wie auch Empfangselemente für Ultraschallwellen umfasst, wobei die Sende- und Empfangselemente jeweils unter Verwendung von MEMS-Technologie ausgebildet sind. Der Ultraschallsensor umfasst eine akustisch flexible Schutzschicht, die über den Sende- und Empfangselementen angeordnet ist. Ferner sind auf einer den Sende- und Empfangselemente abgewandten Seite der Schutzfolie mehrere Schalltrichter angeordnet, die jeweils einem Element der Sende- und Empfangselemente zugeordnet sind und sich jeweils vor dem zugeordneten Element befinden.

Aus der Schrift DE 10 2006 995 048 A1 ist weiter ein Ultraschallsensor bekannt, der eine Sende- und Empfangseinrichtung umfasst, wobei die Empfangsvorrichtung als ein Ultraschallelement mit einem Vibrationselement ausgebildet sein kann. Dieses Vibrationselement umfasst eine piezoelektrische Dünnschicht, die auf der Membran angeordnet ist und einen dünnen Abschnitt eines Substrats bildet. Das Ultraschallelement kann dabei durch die MEMS-Technologie realisiert werden.

Wie in den beiden Schriften dargestellt, sind Ultraschallsensoren bekannt, die als MEMS-Sensoren ausgebildet sind und unter anderem als Empfangselement für Ultraschallsignale dienen können. Es ist jedoch nicht bekannt, die Anlagerung von Schmutz innerhalb eines Schalltrichters durch eine Membran zu verhindern, was zu einer Beeinträchtigung der Signalübertragung führen kann.

### Offenbarung der Erfindung

Um diesem Problem zu begegnen, wird erfindungsgemäß eine Vorrichtung und ein Verfahren zum Empfangen von akustischen Signalen vorgeschlagen.

Die Vorrichtung umfasst einen Grundkörper mit einer Oberseite, einer Membran und einer Empfangseinrichtung zum Empfangen von Schallsignalen. Der Grundkörper weist einen schallführenden Kanal auf, der von der Oberseite des Grundkörpers in die Tiefe des Grundkörpers reicht. Dabei ist der Führungskanal gegenüber der Umgebung mit einer Membran abgedeckt und führt die Schallsignale auf die Empfangseinrichtung.

Ein Vorteil der vorliegenden Vorrichtung ist dessen kompakte und einfache Bauweise. Während bekannte Vorrichtungen zum Empfangen von Schallsignalen ein Gehäuse für den Sensor besitzen, welches dann anschließend in eine Vertiefung in einen Grundkörper eingebaut wird, ist der Schallsensor in der vorliegenden Erfindung direkt mit dem Stoßfänger gekoppelt, wodurch sich eine vereinfachte Herstellung, wie auch Montage ergibt.

Bevorzugte Ausführungsformen der Erfindung sind durch die Merkmale der Unteransprüche gekennzeichnet.

Vorzugsweise ist die Membran auf der Oberseite des Grundkörpers aufgebracht. Die Verbindung mit der Oberfläche geschieht hier mittels eines geeigneten Fügeverfahrens. Diese Verbindung der Membran ist im Herstellungsverfahren ökonomisch effizient.

Eine andere Ausbildungsmöglichkeit ist, dass die Membran in die Oberseite des Grundkörpers integriert ist. Hierbei ist unter integriert einerseits das Einbringen einer Vertiefung in die Oberseite und andererseits das Verbinden der Membran innerhalb der eingebrachten Vertiefung mittels eines passenden Fügeverfahrens mit dem Grundkörper zu verstehen. Ein passendes Fügeverfahren kann hier beispielsweise Kleben oder Schweißen darstellen. Die Integration der Membran in die Oberseite geschieht vorzugsweise so, dass Membran und Oberseite des Grundkörpers in einer Ebene angeordnet sind. Dies kann so durchgeführt werden, dass die Oberseite der Membran und die Oberseite des Grundkörpers bündig angeordnet sind. Durch diese Integration der Membran in die Oberseite ist gewährleistet, dass keine Kanten entstehen, die beispielsweise bei einem sich bewegenden Grundkörper zu einem schlechteren aerodynamischen Verhalten oder einer stärkeren Abnutzung führen können.

Der Führungskanal besteht bevorzugt aus einer durch den Grundkörper reichenden Bohrung. Diese Bohrung ist schnell und einfach herzustellen und zudem wird das entfernte Material schnell über den Ausgang der Bohrung entfernt.

Eine andere Möglichkeit ist, dass der Führungskanal aus einer in die Tiefe des Grundkörpers reichenden Sacklochbohrung besteht.

Bevorzugt schließt die Membran den schallführenden Kanal von einer Seite aus gegenüber der Umgebung ab. Durch diesen Verschluss wird verhindert, dass von dieser Seite aus Schmutz in den schallführenden Kanal eindringen kann.

Falls der schallführende Kanal aus einer durch den Grundkörper gehenden Bohrung besteht, wird das Volumen des schallführenden Kanals durch die Membran auf der einen Seite des schallführenden Kanals und den Abschluss durch die Empfangseinrichtung auf der Unterseite des Grundkörpers hermetisch verschlossen. Dies führt dazu, dass einerseits Schallsignale durch ein Übertragungsmedium innerhalb des Kanals weitergeleitet werden und zudem kein Staub in den Kanal eindringen kann.

Falls der schallführende Kanal aus einer in die Tiefe des Grundkörpers gehenden Sacklochbohrung besteht, ist die Empfangseinrichtung vorzugsweise am Boden oder am Ende des schallführenden Kanals angeordnet. Dadurch ergibt sich für die Empfangseinrichtung eine einfache Anbringungsmöglichkeit im Grundkörper. Vorzugsweise ist das Volumen des Kanals mit einem akustischen Übertragungsmedium gefüllt, welches Schall besser leitet als Luft. Dadurch kann die Weiterleitung der Schallsignale verbessert werden.

Der Kanal ist vorzugsweise trichterförmig ausgebildet. Diese trichterförmige Ausbildung hat eine Verstärkung des Signals zur Folge. Vorzugsweise befindet sich hierbei die breite Öffnung des Trichters an der Oberfläche, wodurch sich das Signal zur Empfangseinrichtung hin am anderen Ende des Kanals verstärkt.

Vorzugsweise verläuft der schallführende Kanal orthogonal zu der Membranfläche, die den Kanal abdeckt. Durch diesen orthogonalen Übergang von Membranfläche und Kanal wird die Bohrung des Kanals und dessen Abdeckung durch die Membran vereinfacht.

In einer weiteren Ausführungsform der Erfindung weist die Vorrichtung mindestens zwei schallführende Kanäle und zwei Empfangseinrichtungen auf. Hierbei ist jeweils einem Kanal eine Empfangseinrichtung zugeordnet. Die mindestens zwei Kanäle werden durch vorzugsweise wenigstens eine gemeinsame Membran verschlossen. Dadurch können mehrere Kanäle, denen jeweils eine Empfangseinrichtung zugeordnet ist, an dem Grundkörper vorgesehen werden, wodurch beispielsweise ein Vergleich der empfangenen Signale durchgeführt werden kann. Die Abdeckung mehrerer mittels einer Membran, hätte zudem eine einfachere Herstellung zur Folge.

Die Vorrichtung weist in einer weiteren Ausführungsform ein Haltemittel auf. Dieses ist unterhalb der Unterseite des Grundkörpers angeordnet und drückt die Empfangseinrichung an die Unterseite des Grundkörpers. Dadurch wird sichergestellt, dass die Empfangseinrichtung ihre Position an der Unterseite des Grundkörpers behält und beispielsweise nicht verschoben wird. Der Empfang der Signale durch die Empfangseinrichtung wird dadurch sichergestellt.

Bevorzugt ist die Empfangseinrichtung als mikromechanischer Drucksensor ausgebildet. Dies bietet den Vorteil, dass sie in hoher Stückzahl fertigbar sind und durch ihre kleine Bauform lassen sie sich leicht an verschiedenen Gehäusestellen platzieren. Vorzugsweise sind diese mikromechanischen Drucksensoren als Mikrofone ausgebildet. Diese können akustische Signale in einem weiten Frequenzbereich effizient aufnehmen.

Der Grundkörper ist vorzugsweise als ein Gehäuse ausgebildet. Andere Möglichkeiten im Fahrzeugbereich sind bevorzugt die Ausbildung als ein Karosserieteil oder ein Stoßfänger.

Vorzugsweise ist die Vorrichtung zum Empfangen von Ultraschallsignalen dimensoniert.

Die Erfindung weist zusätzlich ein Verfahren auf, welches zum Empfangen von Schallsignalen dient und die dargestellte Vorrichtung verwendet. In dem ersten Schritt des Verfahrens wird eine Membran, welche an dem oberen Ende des schallführenden Kanals angeordnet ist, durch Schallsignale angeregt. Der schallführende Kanal selbst reicht in die Tiefe des Grundkörpers und wird durch die Membran, sowie die Empfangseinrichtung, welche an dem unteren Ende des schallführenden Kanals angeordnet ist, abgeschlossen. Die Schallsignale werden darauf folgend an ein Übertragungsmedium, mit welchem der schallführende Kanal gefüllt ist, durch die schwingende Membran übertragen. Im nächsten Schritt des Verfahrens werden die Schallsignale durch das Übertragungsmedium an die Empfangseinrichtung weitergeleitet und erzeugen im letzten Schritt des Verfahrens durch die Empfangseinrichtung ein Messsignal in Abhängigkeit der weitergeleiteten Schallsignale. Durch das dargestellte Verfahren wird es also ermöglicht, mittels der Vorrichtung auf einfache Art und Weise Schallsignale zu empfangen.

### Kurze Beschreibung der Zeichnungen

Ausführungsbeispiele der Erfindung sind in den Zeichnungen dargestellt und in der nachfolgenden Beschreibung näher erläutert.
Figur 1 zeigt eine erste Ausführungsform der Erfindung.
Figur 2 zeigt eine zweite Ausführungsform der Erfindung.
Figur 3 zeigt eine dritte Ausführungsform der Erfindung.
Figur 4 zeigt eine vierte Ausführungsform der Erfindung.
Figur 5 zeigt eine sechste Ausführungsform der Erfindung.
Figur 7 zeigt einen Verfahrensablauf zum Empfangen von Schallsignalen unter Verwendung einer erfindungsgemäßen Vorrichtung zum Empfangen von Schallsignalen.

### Ausführungsbeispiele

In den folgenden Ausführungsbeispielen sind identische Merkmale mit denselben Bezugszeichen gekennzeichnet.

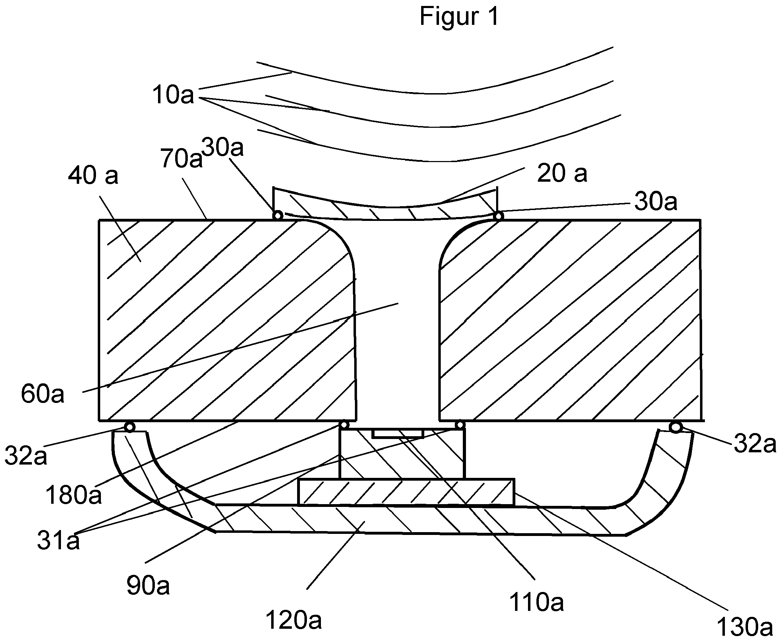

Figur 1 zeigt eine Vorrichtung, die eine Membran 20a besitzt, welche auf der Oberseite eines Grundkörpers 40a aufgebracht ist. Ankommende Schallsignale 10a regen diese Membran 20a zu mechanischen Schwingungen an, deren Frequenzen und Schwingungsamplituden unter anderem von der Frequenz der Schallsignale 10a abhängig sind. Ebenfalls sind diese mechanischen Schwingungen abhängig von der Beschaffenheit der Membran 20a. Die Membran 20a deckt einen schallführenden Kanal 60a ab, welcher wie in Figur 1 gezeigt, aus einer bis zur Unterseite 180a des Grundkörpers 40a reichenden Bohrung besteht. Dem schallführenden Kanal 60a ist eine Empfangseinrichtung 90a mit dessen Empfangseinrichtungs-Membran 110a zugeordnet. Die Empfangseinrichtung 90a ist in dieser Figur mit der Unterseite 170a des Grundkörpers 40a durch beispielsweise eine Klebung 32a verbunden. Optional kann die Empfangseinrichtung 90a auf einer Leiterplatte 130a angebracht sein, wodurch die Empfangseinrichtung einen elektrischen Kontakt erhält. Unterhalb Grundkörpers 40a kann sich alternativ ein weiteres Haltemittel 120a befinden, durch die die Empfangseinrichtung 90a an die Unterseite 180a des Grundkörpers 40a gedrückt werden kann. Bei dem Haltemittel 120a kann es sich, wie auf der Figur 1 gezeigt, um eine elastische, vorgespannte Folie handeln, welche hierbei mit an der Unterseite 170a des Grundkörpers 40a mittels befestigt ist.

Die Membran 20a ist in Figur 1 mit der Oberseite 70a verklebt. Alternativ kann die Membran auch mit einem anderen luftdichten Fügeverfahren mit der Oberseite 70a verbunden sein. Optional kann die Klebung der Membran 20a auch durch ein luftdurchlässiges Fügeverfahren erfolgen. Eine weitere Alternative stellt der hermetische Verschluss des Volumens des schallführendes Kanals 60a mittels der Klebung 30a zusammen mit Membran 20a und der weiteren Klebung 31a zusammen mit der Empfangseinrichtung 90a dar. Durch den hermetischen Verschluss wird verhindert, dass, falls der schallführende Kanal 60a mit einem anderen Übertragungsmedium als Luft gefüllt ist, dieses Übertragungsmedium aus dem schallführenden Kanal 60a entweichen kann. Vorstellbar wäre beispielsweise die Füllung mit dem Übertragungsmedium Polystyrol oder einer Flüssigkeit wie Wasser, in welchem sich die Schallsignale aufgrund der höheren Schallkennimpedanz schneller ausbreiten können, als in Luft. Außerdem kann bei einem hermetischen Verschluss kein Staub in den schallführenden Kanal 60a eindringen, was zu einer Beeinträchtigung der Schallführung führen kann. Bei einem luftdurchlässigen Verschluss kann die Staubansammlung durch einen Luftzug entfernt werden. Hier muss allerdings darauf geachtet werden, dass der Luftaustausch des schallführenden Kanals 60a mit der Umgebung sehr langsam vonstatten geht. Andernfalls ist das Übertragen der Schallsignale an das Übertragungsmedium innerhalb des schallführenden Kanals 60a nicht sichergestellt. In einem weiteren Ausführungsbeispiel kann der schallführende Kanal 60a trichterförmig ausgebildet sein. Hierbei kann sich die breite Öffnung des Trichters an der Oberseite 70a des Grundkörpers 40a befinden, wodurch sich das Signal zur Empfangseinrichtung hin am anderen Ende des Kanals verstärkt. Der schallführende Kanal 60a kann, wie in Figur 1 dargestellt, orthogonal zu der Membranfläche, welche den schallführenden Kanal 60a abdeckt, verlaufen.

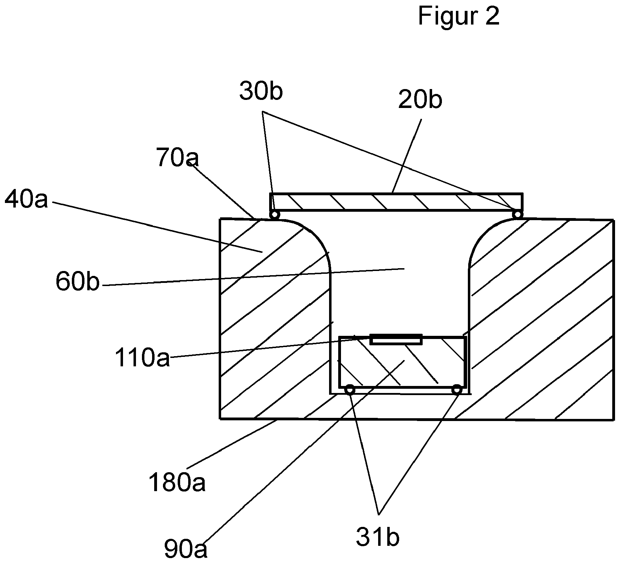

Figur 2 zeigt eine Vorrichtung zum Empfangen von Schallsignalen, bei der im Unterschied zu der vorher dargestellten Ausführungsform der dargestellte schallführende Kanal 60b aus einer in die Tiefe des Grundkörpers 40a reichenden Sacklochbohrung besteht. In diesem Ausführungsbeispiel ist die Empfangseinrichtungen 90a am Boden des schallführenden Kanals 60b angebracht, welcher auch auf dieser Figur 2 trichterförmig ausgebildet ist, angebracht. In diesem zweiten Ausführungsbeispiel ist die Empfangseinrichtungen 90a mittels Klebungen 30b mit dem Boden verbunden. Auch eine andere Befestigung wäre hierbei vorstellbar.

Die Membran 20b, welche wie auf der Figur 2 dargestellt, auf der Oberseite 70a des Grundkörpers 40b angebracht sein kann, deckt hierbei einen schallführenden Kanal 60b ab. Die Membran 20b kann den schallführenden Kanal 60b hermetisch oder alternativ luftdicht oder auch alternativ luftdurchlässig verschließen.

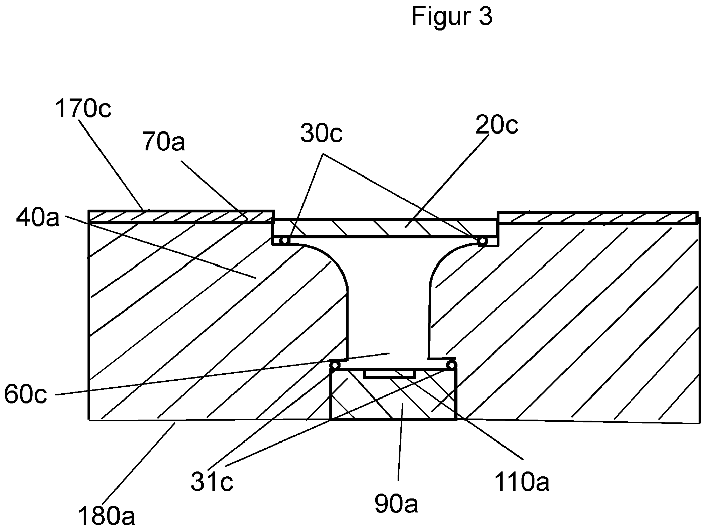

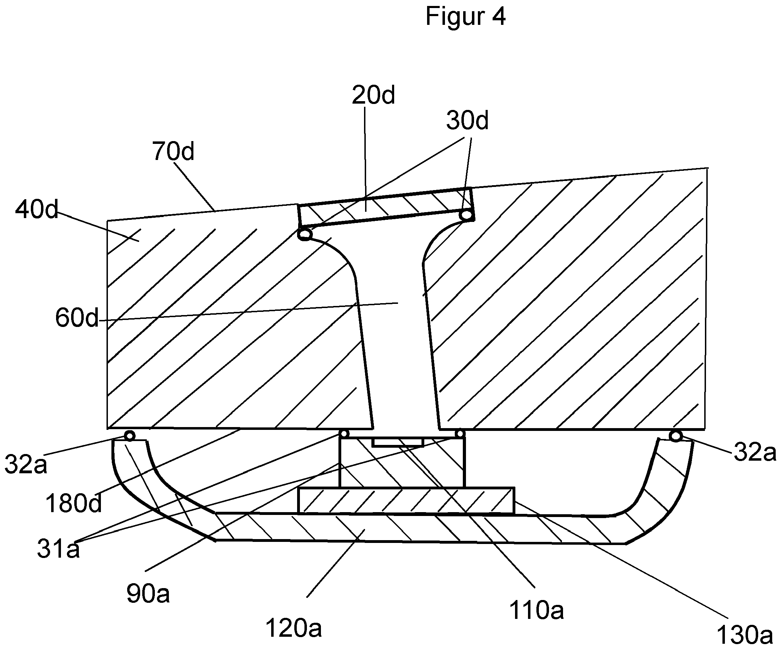

Figur 3 zeigt eine Vorrichtung zum Empfangen von Schallsignalen, wobei hier im Unterschied zu den vorherigen Ausführungsbeispielen eine Membran 20c in die Oberseite 70a eines Grundkörpers 40a integriert ist. Dies ist in diesem Ausführungsbeispiel so dargestelllt, dass die Membran 20c in einer Vertiefung in der Oberseite 70a mit dem Grundkörper 40a verbunden ist. Hierbei ist die Membran 20c beispielsweise mit dem Grundkörper 40a durch die Klebung 30c verbunden. Die Membran 20c kann so integriert sein, dass die Oberseite 70a des Grundkörpers 40a und die Membran 20c auf einer Ebene angeordnet sind. Dies kann, wie auf der Figur 4 gezeigt, auch so geschehen, dass die Oberseite 70a des Grundkörpers 40c und die Membran 20c bündig in einer Ebene angeordnet sind. Zustäzlich kann auch die Empfangseinrichtung 90a in die Unterseite 180a des Grundkörpers 40c integriert sein. Dies kann beispielsweise so geschehen, dass die Unterseite 180a und die Unterseite der Empfangseinrichtung 90a bündig in einer Ebene angeordnet sind. Hierbei ist die Empfangseinrichtung 90a beispielsweise mit dem Grundkörper 40a durch die Klebung 31c verbunden. Optional ist die Oberseite 70a des Grundkörpers mit einer Schutzschicht 170c überzogen. Diese schützt die Oberseite 70a des Grundkörpers 40c vor Umwelteinflüssen, die Beweglichkeit der Membran 20c ist jedoch weiter sichergestellt. Alternativ dazu kann nur die Membran 20c mit einer Schutzschicht 170c überzogen sein. Desweiteren können alternativ die Oberseite 70a des Grundkörpers 40a und die Membran 20c mit einer Schutzschicht 170c überzogen sein. Diese Alternativen der Auftragung einer Schutzschicht 170c können auch auf die Unterseite 180a, sowie die dort integrierte Empfangseinrichtung 90a angewendet werden. In diesem dritten Ausführungsbeispiel schließt die Membran 20c einen trichterförmigen, schallführenden Kanal 60c ab, welche aus einer durch den Grundkörper 40a gehenden Bohrung bestehen. Alternativ kann der schallführende Kanal 60c aus einer Sacklochbohrung wie in dem zweiten Ausführungsbeispiel bestehen. Der schallführende Kanal 60c verläuft in diesem, wie auch in den vorherigen Ausführungsbeispielen orthogonal zu der Membranfläche. Der schallführende Kanal 60c führt die Schallsignale auf die Empfangseinrichtung 90a. In einer weiteren Ausführungsform kann das Volumen des schallführende Kanals 60c hermetisch abgeschlossen sein. Dieser Verschluss erfolgt in diesem dritten Ausführungsbeispiel bei einer durch den Grundkörper 40a reichenden Bohrung mittels der Membran 20c und mittels der Empfangseinrichtung 90a.

Auf Figur 4 wird ein Grundkörper 40d gezeigt, wobei hier im Vergleich zu den vorherigen Ausführungsbeispielen die Oberseite 70d des Grundkörpers 40d nicht parallel zu der Unterseite 180d des Grundkörpers 40d verläuft. Der schallführende Kanal 60d, welcher auf dieser Figur orthogonal zu der Membran 20d angeordnet ist, verläuft in einer Winkelneigung durch den Grundkörper 40d. Alternativ kann der schallführende Kanal senkrecht zu der Unterseite 180d des Grundkörpers 40d verlaufen, indem er innerhalb des Grundkörpers 40d nicht mehr orthogonal zu der Membranfläche angeordnet ist.

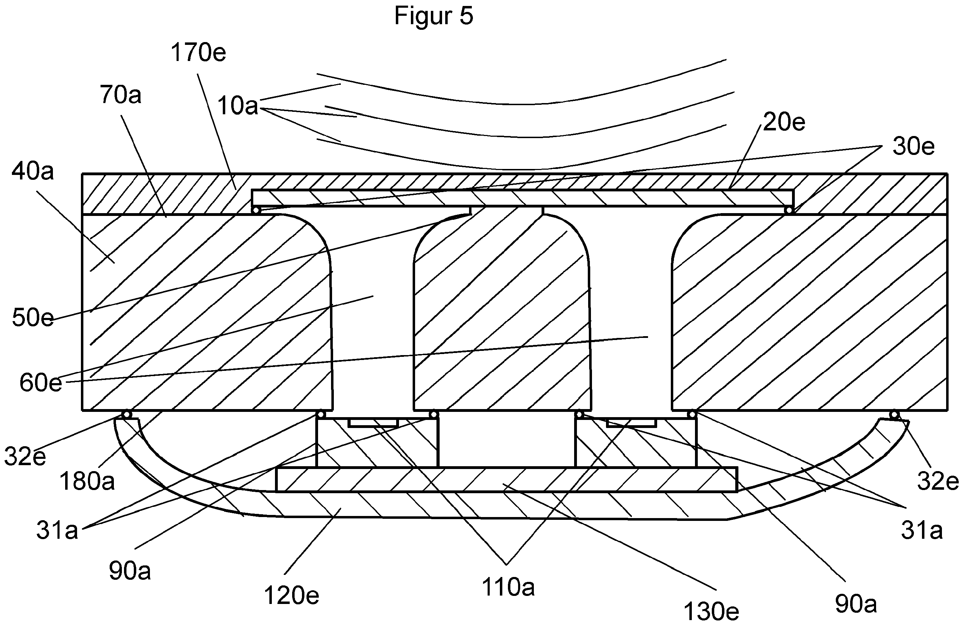

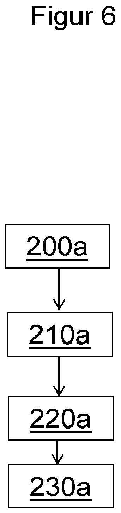

Auf Figur 5 wird eine Vorrichtung gezeigt, analog zu dem ersten Ausführungsbeispiel, wobei in diesem Ausführungsbeispiel zwei schallführende Kanälen 60e von einer gemeinsamen Membran 20e abgedeckt werden. Die Membran 20e befindet sich auch in diesem Ausführungsbeispiel auf der Oberseite 70a des Grundkörpers 40a. Damit es nur oberhalb der schallführenden Kanäle 60e zu einer Schwingung der Membran 20e kommt, kann die Membran 20e in einem weiteren Ausführungsbeispiel auf einer Säule 50e des Grundkörpers 40a zwischen den beiden Führungskanälen 60e aufliegen. Alternativ dazu kann die Membran 20e mit der Säule 50e durch eine Klebung an dem Grundkörper 40a befestigt sein. Dadurch kommt es nur zu einer Schwingung überhalb der schallführenden Kanäle 60e und nicht zu einer Schwingung in dem Bereich zwischen den Kanälen 60e. Optional können die mindestens zwei schallführenden Kanäle 60e, denen jeweils eine Empfangseinrichtung 90a zugeordnet ist und die von einer Membran 20e abgedeckt werden, als Arrays angeordnet sein. Die Membran 20e, welche in diesem Ausführungsbeispiel auf der Oberseite 60e des Grundkörpers 40a angebracht ist, und die Oberseite 70e des Grundkörpers 40a können beide mit einer Schutzschicht 170e überzogen sind. Dadurch ist die Oberseite 70e, sowie die Membran 20e vor Umwelteinflüssen geschützt. Alternativ kann nur die Membran 20e oder nur die Oberseite 70e mit einer Schutzschicht 170e überzogen sein. Bei dem dargestellten Haltemittel, welches auf der Unterseite 180a des Grundkörpers 40a angeordnet ist, kann es sich um eine elastische, vorgespannte Folie handeln.

Das sechste Ausführungsbeispiel zeigt erfindungsgemäß einen Verfahrensablauf eines Empfangs von Schallsignalen, wobei hierbei eine Vorrichtung nach der vorherigen Ausführungsbeispiele Anwendung findet.

Im ersten Schritt 200a des Verfahrens wird eine Membran durch die ankommenden Schallsignale zum Schwingen angeregt.

Im zweiten Schritt 210a kommt es innerhalb des schallführenden Kanals durch die Schwingungen der Membran zu einem Übertragen der Schallsignale an das Übertragungsmedium, da das Übertragungsmedium mit welchem das Volumen des schallführenden Kanals gefüllt ist, komprimiert und anschließend wieder expandiert wird.

Im dritten Schritt 220a des Verfahrens werden die Schallsignale an die Empfangseinrichtung durch das Übertragungsmedium weitergeleitet.

Im vierten Schritt 230a des Verfahrens wird dann in der Empfangseinrichtung ein Messsignal in Abhängigkeit der weitergeleiteten Schallsignale erzeugt.

Bei den in den obigen Ausführungsbeispielen dargestellten Schallsignalen kann es sich um Ultraschallsignale im Frequenzbereich 40-50 kHz handeln, welche aus dem Umfeld eines Fahrzeugs kommen. Die Membran kann in diesem Zusammenhang zum Empfangen von solchen Ultraschallsignalen dimensioniert sein. Hierbei muss darauf geachtet werden, dass die maximale Schwingungsamplitude der Membran nicht größer als 10 µm ist, um einen Anschlag der Membran an den Grundkörper zu vehindern.

Je nach Schwingungseigenschaften der Membran und/oder den Übertragungseigenschaften der Schallsignale des Übertragungsmediums kann eine (Schall-)Impedanzanpassung erfolgen, um so eine verbesserte Energieübertragung auf den MEMS-Sensor zu erreichen.
Diese Anpassung ist unter Umständen jedoch nicht zwingend notwendig, sondern die übertragenen Signale können auch unverändert übertragen werden.

Bei dem in den obigen Ausführungsbeispielen dargestellten Grundkörper kann es sich um ein Fahrzeugbestandteil, wie beispielsweise ein Karosserieteil oder einen Stoßfänger handeln.

Bei der Empfangsvorrichtung kann es sich in den obigen Ausführungsbeispielen um einen mikromechanischen Drucksensor handeln. Der mikroskopische Drucksensor kann in einer noch spezielleren Gestaltung als Mikrofon nach der MEMS-Technologie ausgebildet sein. Dort wird dann im vierten Schritt 230a ein Messsignal in Abhängigkeit der weitergeleiteten Schallsignale erzeugt.

## Patentansprüche

1. Vorrichtung zum Empfangen von akustischen Signalen (10a) umfassend
- einen Grundkörper (40a, 40d) mit einer Oberseite (70a, 70d) und
- eine Membran (20a, 20b, 20c, 20d, 20e) und
- eine Empfangseinrichtung (90a) zum Empfangen von Schallsignalen (10a),
**dadurch gekennzeichnet, dass**
- der Grundkörper (40a, 40d,) einen ausgehend von der Oberseite (70a, 70d) in die Tiefe des Grundkörpers (40a, 40d) gehenden schallführenden Kanal (60a, 60b, 60c, 60d, 60e) aufweist und
- die Membran (20a, 20b, 20c, 20d, 20e) den schallführenden Kanal (60a, 60b, 60c, 60d, 60e) gegenüber der Umgebung abdeckt und
- der schallführende Kanal (60a, 60b, 60c, 60d, 60e) die Schallsignale (10a) auf die Empfangseinrichtung (90a) führt.

2. Vorrichtung nach Anspruch 1, wobei die Membran (20a, 20b, 20c, 20d, 20e) auf der Oberseite (70a, 70d) des Grundkörpers (40a, 40d) aufgebracht ist.

3. Vorrichtung nach Anspruch 1, wobei die Membran (20a, 20b, 20c, 20d, 20e) in die Oberseite (70a, 70d) des Grundkörpers (40a, 40d) integriert ist, sodass die Oberseite (21d) der Membran (20a, 20b, 20c, 20d ,20e) und die Oberseite (70a, 70d) in einer Ebene, insbesondere bündig, angeordnet sind.

4. Vorrichtung nach einem der Ansprüche 1 bis 3, wobei der Führungskanal (60a, 60b, 60c, 60d, 60e) aus einer durch den Grundkörper (40a, 40d) führenden Bohrung besteht.

5. Vorrichtung nach einem der Ansprüche 1 bis 3, wobei der Führungskanal (60a, 60b, 60c, 60d, 60e) aus einer in die Tiefe des Grundkörpers (40a, 40d) führenden Sacklochbohrung besteht.

6. Vorrichtung nach einem der Ansprüche 1 bis 5, wobei die Membran (20a, 20b, 20c, 20d, 20e) den schallführenden Kanal (60a, 60b, 60c, 60d, 60e) gegenüber der Umgebung verschließt.

7. Vorrichtung nach Anspruch 4, wobei der Führungskanal (60a, 60b, 60c, 60d, 60e) durch die Empfangseinrichtung (90a) auf der Unterseite (180a, 180d) des Grundkörpers (40a, 40d) und durch die Membran (20a, 20b, 20c, 20d, 20e) hermetisch gegenüber der Umgebung verschlossen wird.

8. Vorrichtung nach Anspruch 5, wobei die Empfangseinrichtung (90a) am Boden des schallführenden Kanals (60a, 60b, 60c, 60d, 60e, 60f, 60g) angebracht ist.

9. Vorrichtung nach einem der Ansprüche 1 bis 8, wobei das Volumen des schallführenden Kanals (60a, 60b, 60c, 60d, 60e) gefüllt ist mit einem Übertragungsmedium, welches eine größere Schallkennimpedanz besitzt als Luft.

10. Vorrichtung nach einem der Ansprüche 1 bis 9, wobei der schallführende Kanal (60a, 60b, 60c, 60d, 60e) trichterförmig ausgebildet ist.

11. Vorrichtung nach einem der Ansprüche 1 bis 10, wobei der schallführende Kanal (60a, 60b, 60c, 60d, 60e) orthogonal zu der Membranfläche, die den schallführenden Kanal (60a, 60b, 60c, 60d, 60e) abdeckt, verläuft.

12. Vorrichtung nach einem der Ansprüche 1 bis 11, wobei die Vorrichtung mindestens zwei schallführende Kanäle (60a, 60b, 60c, 60d, 60e) und zwei Empfangseinrichtungen (90a) aufweist, wobei jeweils einem schallführenden Kanal (60a, 60b, 60c, 60d, 60e) eine Empfangseinrichtung (90a) zugeordnet ist, wobei eine Membran (20a, 20b, 20c, 20d, 20e) wenigstens zwei schallführende Kanäle (60a, 60b, 60c, 60d, 60e) verschließt.

13. Vorrichtung nach Anspruch 4, wobei die Vorrichtung ein Haltemittel (120a, 120b) aufweist, wobei dieses Haltemittel (120a, 120b) unterhalb der Unterseite (180a, 180d) des Grundkörpers (180a, 180b, 180c, 180d, 180e, 180f, 180g) angeordnet ist und die Empfangseinrichtung (90a) an die Unterseite (180a, 180b, 180c, 180d, 180e,180f, 180g) des Grundkörpers (40a, 40b, 40c, 40d, 40e, 40f, 40g) drückt.

14. Vorrichtung nach einem der Ansprüche 1 bis 13, wobei die Empfangseinrichtung (90a) zum Empfangen von Schallsignalen (10a) als mikromechanischer Drucksensor, insbesondere als Mikrofon ausgebildet ist.

15. Vorrichtung nach einem der Ansprüche 1 bis 14, wobei der Grundkörper (40a, 40d) als ein Gehäuse, ein Karosserieteil oder ein Stoßfänger ausgebildet ist.

16. Vorrichtung nach einem der Ansprüche 1 bis 15, wobei die Membran (20a, 20b, 20c, 20d, 20e, 20f, 20g) zum Empfangen von Ultraschallsignalen dimensioniert ist.

17. Verfahren zum Empfangen von Schallsignalen (10a) mit einer Vorrichtung nach Anspruch 16, wobei die Vorrichtung
- einen Grundkörper (40a, 40d),
- eine Membran (20a, 20b, 20c, 20d, 20e), welche an dem einen Ende eines schallführenden Kanals (60a, 60b, 60c, 60d, 60e) angeordnet ist,
- eine Empfangseinrichtung (90a) zum Empfangen von Schallsignalen (10a), welche an dem anderen Ende des schallführenden Kanals (60a, 60b, 60c, 60d, 60e) angeordnet ist, aufweist,
wobei der schallführende Kanal (60a, 60b, 60c, 60d, 60e)
- in die Tiefe des Grundkörpers (40a, 40d) reicht,
- durch die Membran (20a, 20b, 20c, 20d, 20e) abgedeckt wird,
- auf die Empfangseinrichtung (90a) führt und
- mit einem Übertragungsmedium gefüllt ist,
wobei das Verfahren folgende Schritte aufweist:
- Anregung der Membran (20a, 20b, 20c, 20d, 20e) durch Schallsignale (10a)
- Übertragen ankommender Schallsignale (10a) an das Übertragungsmedium im Volumen des schallführenden Kanals (60a, 60b, 60c, 60d, 60e) durch die Membran (20a, 20b, 20c, 20d, 20e),
- Weiterleiten der Schallsignale (10a) an die Empfangseinrichtung (90a) durch ein Übertragungsmedium, mit welchem der Führungskanal (60a, 60b, 60c, 60d, 60e) gefüllt ist und
- Erzeugen eines Messsignals in Abhängigkeit der weitergeleiteten Schallsignale (10a, 10b) durch die Empfangseinrichtung (90a).
